# EUROPEAN PATENT SPECIFICATION

(11) **EP 3 031 529 B1**
(45) Date of publication and mention of the grant of the patent: **20.09.2017**
(21) Application number: 15198253.5
(22) Date of filing: 07.12.2015
(51) Int. Cl.: B04B 1/00, B04B 7/02, B04B 7/08, B04B 9/08, B04B 9/12, B04B 11/04, B23Q 11/10

(54) **A DISCONTINUOUS WORKING CYCLE CENTRIFUGAL MACHINE FOR SEPARATING OIL FROM METAL CHIPS PRODUCED BY MACHINE TOOLS**
ZENTRIFUGALMASCHINE MIT DISKONTINUIERLICHEM ARBEITSZYKLUS ZUM TRENNEN DES ÖLS VON METALLSPÄNEN DIE DURCH WERKZEUGMASCHINEN PRODUZIERT WURDEN
MACHINE CENTRIFUGE À CYCLE DE FONCTIONNEMENT DISCONTINU POUR SÉPARER L'HUILE DE COPEAUX METALLIQUES QUI SONT PRODUITES PAR DES MACHINES-OUTILS

(30) Priority: 11.12.2014 IT CR20140032
(43) Date of publication of application: 15.06.2016
(73) Proprietor: Avimatic Srl, 26010 Bagnolo Cremasco (IT)
(72) Inventor: PREDA, Piergiuseppe, 26025 Pandino (CR) (IT)
(74) Representative: Mari, Marco Giovanni

(56) References cited:
- EP-A1- 0 036 641
- DE-A1-102006 009 174
- JP-A- 2000 210 592
- JP-A- 2000 218 464
- KR-A- 20140 040 506

## Description

The invention relates to the sector of mechanical industries for metalworking.

More in detail, the invention relates to a centrifugal machine adapted to carry out discontinuous working cycles for separating oil from metal chips produced by machine tools of the chip removal type.

Centrifugal machines are equipment used to dry the metal chips and recover the coolant, i.e. the oil used by the machine tools during machining, to reduce pollution, improve the quality of the chips and allow them to be disposed of or re-used in conformity with environmental regulations.

According to the prior art, in conventional discontinuous working cycle centrifugal machines the chips are loaded and unloaded from above and they comprise a frame structure provided with a top closing lid; a basket removable from above, substantially frustoconical in shape, adapted to contain the chips from which oil is to be removed; motor means provided with a rotating drive shaft and motion transmission means adapted to cooperate with the drive shaft to transfer rotary motion to the basket around its vertical axis. An electrical control unit monitors the working cycle. A shell protects the machine and the operators.

The metal chips produced by the machine tools are unloaded from the collection bins into the containment basket of the centrifuge and are subjected to acceleration due to the rotation imparted to the basket by the drive shaft of the machine. Due to the centrifugal force generated, the oil is separated from the chips, is pushed onto the walls of the basket and rises along these walls, exiting through a collection channel located adjacent to the edge of the basket, to then be discharged outside.

The chips with the oil removed remain in the containment basket and are recovered manually by the operator, or by lifting and removal of the basket from above with a mechanical means and subsequent pouring into a container bin for recycling of the material with the oil removed.

JP 2000 218464 A discloses an exemple of a discontinuous working cycle centrifugal machine, according to the pre-characterizing portion of claim 1. The main drawbacks of these centrifugal machines relate to the difficulty in manual loading from above of the chips into the containment basket and subsequent unloading, again manual, or using of pitchforks and shovels, or machines for lifting the basket, once the oil has been removed.

In fact, the chips laden with oil must first be collected from the discharge hoppers placed under each machine tool, taken close to the centrifugal machine by means of collection bins moved by the operator, and finally removed from the bin and loaded from above into the basket of the centrifuge.

All these operations oblige the operator to handle the chips with the risk of injury and of getting dirty, as well as the danger of oil spillage along the route and the various movements inside the workshop, creating slippery stains on the ground.

The chip handling operations can be even more difficult and problematic for chips in bundles, i.e. thread-like chips that tend to become tangled and are not in the form of simple metal powders and scraps.

The invention intends to overcome these limits, concerning a discontinuous working cycle centrifugal machine, adapted for separating oil from metal chips produced by machine tools that provides a single and complete system for collecting chips, loading the machine, removing the oil and unloading the machine, wherein said machine is simple to use, avoids lifting of the chips, is safe for the operators and enables loading and unloading of the chips into and from this machine to be carried out quickly and easily.

Another object of the invention is to produce a centrifugal machine that is efficient, productive and versatile.

These objects are achieved with a discontinuous working cycle centrifugal machine for separating oil from metal chips produced by machine tools comprising:
- a fixed frame structure;
- a removable basket having frustoconical shape adapted to contain said chips;
- motor means provided with a rotating drive shaft;
- motion transmission means adapted to cooperate with said drive shaft to transfer rotary motion from said motor means to said basket around a vertical axis;
- a control unit;
- a shell for said frame structure;
characterized in that:
- said basket comprises a base, provided with wheels, with which it is rotatingly associated;
- said transmission means reversibly cooperate with said basket, without the drive shaft passing through it;
- said shell comprises a front door,
wherein said basket can be arranged in a removable manner in said frame structure, passing through said front door, to carry out loading and unloading of said chips in the centrifugal machine, keeping the ground contact of its base.

According to a first aspect of the invention, said base comprises:
- a pin on which said basket is free to rotate;
- reversible locking means, adapted to respectively lock or release the rotatory movement of said basket on said pin of said base.

Further, said frame structure comprises alignment means adapted to cooperate with said base to ensure correct positioning of said basket inside said centrifugal machine.

Advantageously, a gripping handle can be reversibly associated with said base.

According to a further aspect of the invention, said motion transmission means comprise:
- at least an engaging tooth provided along the upper edge of said basket;
- a lid for said basket provided with at least a slot, integral with said drive shaft that rotates and slides with respect to said frame structure,
wherein said at least an engaging tooth and said at least a slot are adapted to cooperate by shape coupling to make said lid and said basket integral and to transfer the motion from said rotating drive shaft to said basket.

Moreover, said centrifugal machine comprises a channel for collecting said oil obtained between the upper edge of said basket and the rim of said lid.

According to a preferred embodiment of the invention, said lid comprises a counter-plate provided with tips, adapted to act as retaining means of said chips when said basket rotates.

Advantageously, said motor means are provided at the upper portion of said machine, above said basket.

Further, said centrifugal machine comprises vertical guides and motor means adapted to enable said front door to slide vertically.

The main advantage of the invention consists in the fact that said containment basket is suitably shaped and equipped to be able to be removed from the centrifugal machine and moved easily by pushing, without lifting it from the ground, inside the working areas and the workshop, in which the various machine tools that produce the scrap chips laden with oil are located.

Said basket can in fact be placed directly under the machine tools, in the collection point of the metal scrap chips and, when full, can be moved easily by the operator by means of the base provided with wheels, and inserted directly into the centrifugal machine, pushing inside from the front, and itself becoming an integral part of the machine.

The chips no longer require to be handled and moved by the operator from the collection bins located under the hoppers of the machine tools to the basket of the conventional centrifugal machines. The solution claimed produces a system for moving and removing the oil, so that the chips laden with oil are no longer transferred by the operator from one container to another during transfer from the machine tool to the centrifugal machine.

The base provided with wheels with which the basket is rotatingly associated facilitates operations to move the basket inside the areas: the basket rests on the ground at all times and never requires to be lifted. Further, the gripping handle provided on the base helps the operator to push the basket and remain erect at all times.

Unlike conventional centrifugal machines, the rotating drive shaft does not pass through the basket, which therefore remains free to enter and exit from the machine, due to horizontal translation and to the passage through the vertically sliding front door provided in the shell, without having to be lifted. Moreover, the inner volume of the basket remains completely free to contain the chips: the containment volume is therefore greater.

The motor means arranged above the lid of the basket even more advantageously facilitate these operations for insertion and removal of the basket into and from the machine, without occupying space under its base plane.

The means for reversible locking of the basket to the base make both the operation for release of the basket once it has been positioned inside the machine and is ready to be centrifuged, and the corresponding coupling operation to pick it up and remove it from the machine, once the oil has been removed from the chips, quick and easily, without the risk of it continuing to rotate.

The alignment means located on the base of the machine ensure that the basket is always positioned aligned with the rotating drive shaft and the centrifuge is always well balanced: this offers advantages of safety and efficiency of the machine.

The counter-plate provided with tips associated with the closing lid of the basket keeps the chips, in particular when tangled in a bundle, in position during centrifugation, to prevent them from being arranged unevenly against the walls of the basket, where only the oil to be removed must be conveyed, and causing undesirable vibrations.

The advantages of the invention will be made clearer below with the description of a preferred embodiment, provided by way of non-limiting example, and with the aid of the drawings wherein:
Figs. 1 and 2 represent, in an axonometric view from two different angles, a centrifugal machine, without the shell for clarity of representation, according to the invention;
Figs. 3-5 represent, respectively in an axonometric view and in two side views, a component of the machine of Fig. 1, i.e. its basket;
Fig. 6 represents, in a sectional view along a horizontal plane, the basket of Fig. 4;
Figs. 7 and 8 represent, in a sectional view along two orthogonal vertical planes, the centrifugal machine of Fig. 1;
Fig. 9 represents, in an axonometric view, the machine of Fig. 1, without its basket;
Figs. 10-12 represent, in an axonometric view and in a frontal plan view, the machine of Fig. 1, complete with shell, in two different operating phases.

With reference to the figures, there is shown a discontinuous working cycle centrifugal machine 1 adapted to separate oil from metal chips produced by machine tools.

Said centrifugal machine 1 essentially comprises:
- a fixed frame structure 2;
- a basket 3 having frustoconical shape adapted to collect and contain said chips;
- motor means 4 provided with a rotating drive shaft 5 with vertical axis and arranged at the upper portion of said machine 1, above said basket 3;
- motion transmission means 6, 7, 8 adapted to cooperate with said drive shaft 5 to transfer rotary motion from said motor means 4 to said basket 3;
- a control unit 31;
- a shell 27 of said frame structure 2.

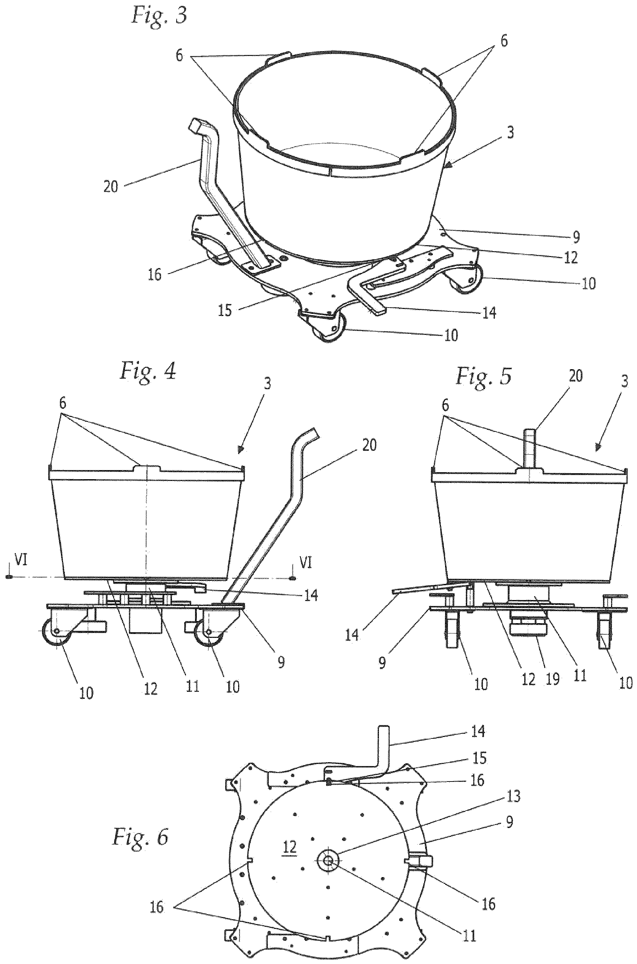

With reference to Figs. 3-6 said basket 3 comprises a base 9 with which it is rotatingly associated, and said base 9 is provided with wheels 10 for its movement.

Said basket 3 is in fact removable with respect to the centrifugal machine 1, and in particular to said frame structure 2, to allow the metal chips to be loaded into, and subsequently unloaded from, the machine.

To allow frontal insertion and extraction of said basket 3 into and from said machine 1, the shell 27 comprises a front door 30, positioned substantially at ground level.

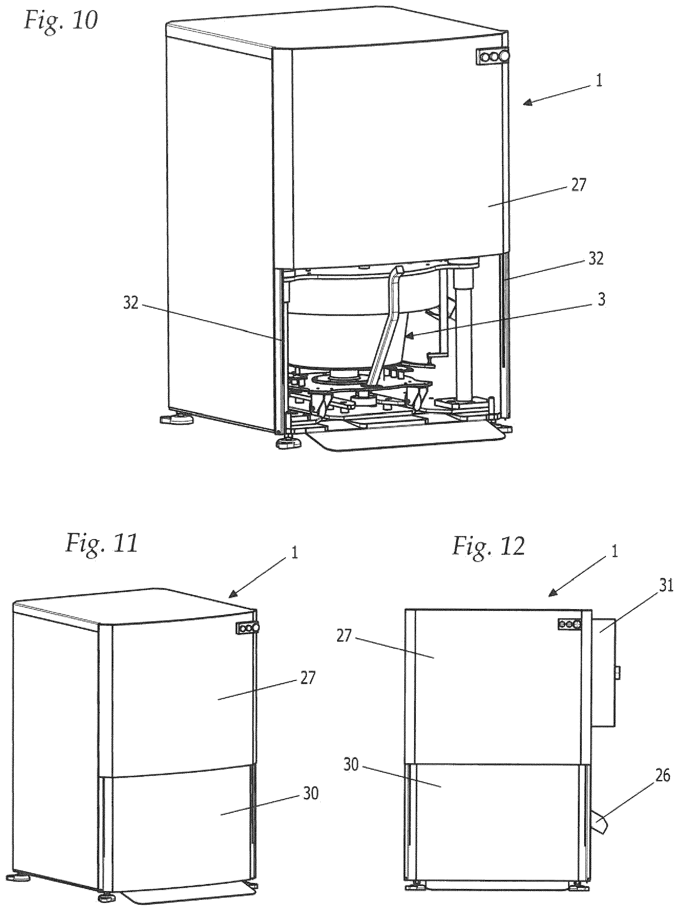

Said centrifugal machine comprises vertical guides 32 and motor means 33 adapted to enable said front door 30 to slide vertically (Figs. 10-12), and thus enable the passage of said basket.

To move said basket 3 easily, a gripping handle 20 can be associated, also reversibly, with the base 9.

The gripping handle 20 and the wheels 10 enable said basket 3 placed on the base 9 to translate horizontally, without requiring it to be lifted off the ground, but always keeping the ground contact with the base 9.

Said base 9 comprises a pin 11 on which said basket 3 is free to rotate and said pin 11 acts as idler shaft: said idler shaft cooperates with said rotating drive shaft 5 to maintain the basket 3 aligned and ensure correct centrifugation of the chips contained inside this basket.

Said drive shaft 5 and said idler shaft 11 cooperate with said basket 3 without passing through it, due to said motion transmission means 6, 7, 8 that partly occupy the upper edge of said basket 3.

In the variant shown, said motion transmission means comprise:
- four engaging teeth 6 provided along the upper edge of said basket 3 and arranged equidistant from one another, at the four cardinal points,
- a lid 7 for said basket 3, integral with said rotating drive shaft 5, and provided with four corresponding slots 8 complementary to said four engaging teeth 6.

Said lid 7, together with the motor means 4, is movable, being able to be lifted or lowered with respect to said basket 3, so that shape coupling between said engaging teeth 6 and said slots 8 can take place.

In particular, said lid 7 can slide along vertical guides 28, which are part of the fixed frame structure 2 of the machine 1. The vertical translation movement of said lid 7 is produced by specific motor means 29.

Said four engaging teeth 6 and said four slots 8 are in fact adapted to cooperate by shape coupling to make said lid 7 and said basket 3 integral and to transfer the motion from said rotating drive shaft 5 to said basket 3, and thus enable the centrifugal movement.

To ensure correct positioning of said basket 3 inside said centrifugal machine 1, said frame structure 2 also comprises alignment means 17, 18 adapted to cooperate with said base 9.

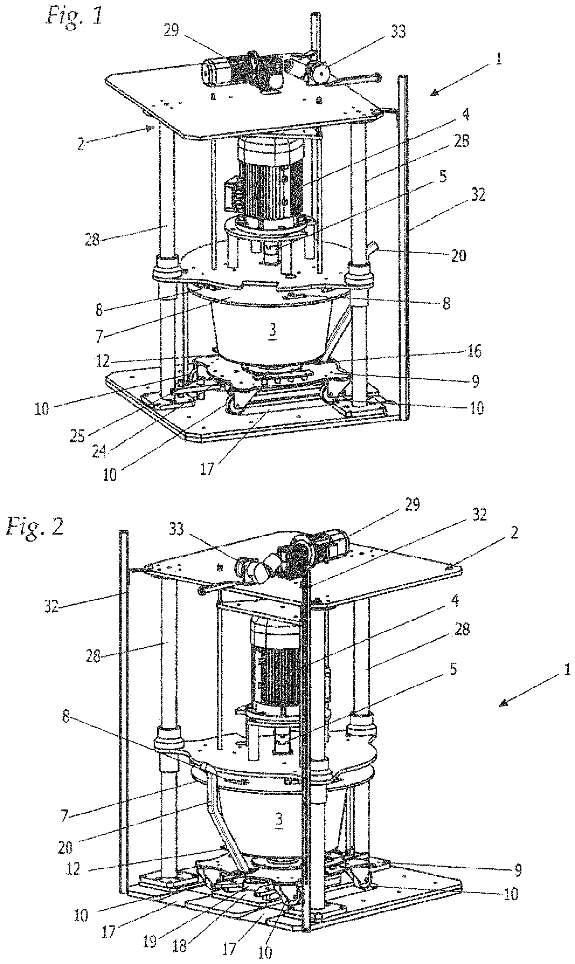

As shown in Figs. 1, 2, 7 and 9, said alignment means comprise two lateral parallel trails 17 into which the wheels 10 of the base 9 of said basket 3 can be inserted and a central rail 18, inside which specific bearings 19, provided under said base 9, slide.

Said alignment means also comprise stop means 24 adapted to limit the insertion depth of the basket 3 in the machine 1, to ensure that the drive shaft 5 and idler shaft 11 are coaxial before activating rotation.

Said stop means are also provided with a position sensor 25 adapted to detect the correct arrangement of the basket 3 and to control switching on and switching off of the machine 1.

With particular reference to Figs. 3 and 6, said base 9 comprises reversible locking means adapted alternatively to make said basket 3 integral with its base 9 (during its movement outside the machine 1) or to make said basket 3 and said base 9 independent (to enable rotation only of the basket 3 inside the machine 1 with respect to the base 9, which remains still).

A supporting plate 12, provided with a central hole 13 for the passage of said idle pin 11 is fixed to the bottom of said basket 3, facing said base 9.

Said locking means comprise a lever 14 pivoted on said base 9, provided at one of its end with a notch 15 adapted to reversibly engage a recess 16, instead provided along the edge of said supporting plate 12 of said basket 3.

Said notch 15 is adapted to occupy said recess 16 or to free it as a result of lowering of a piston, integral with the frame structure 2 of the machine 1, which acts on said lever 14, controlled by said motor means 4, in coordination with switching on and switching off of said machine 1.

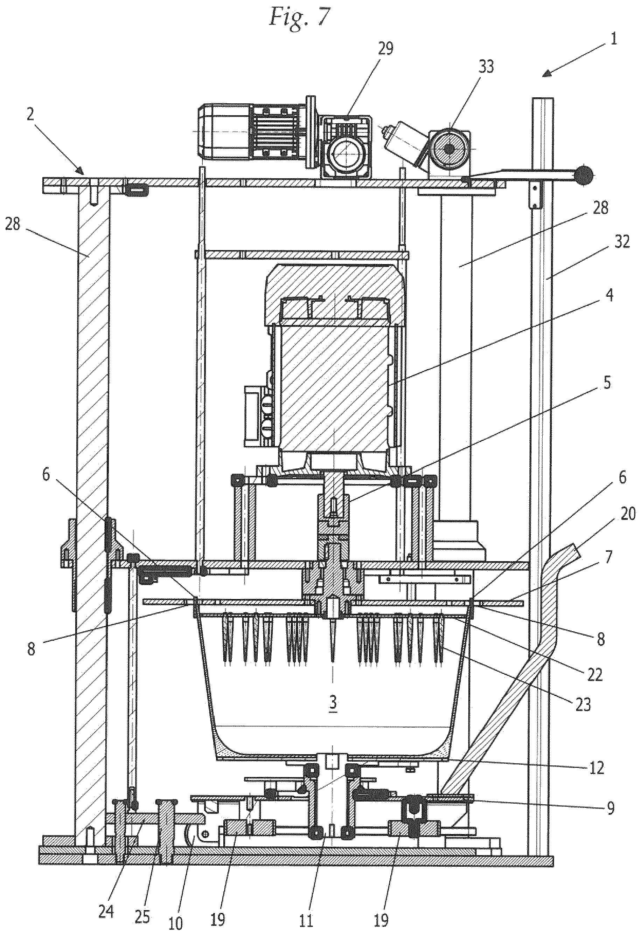

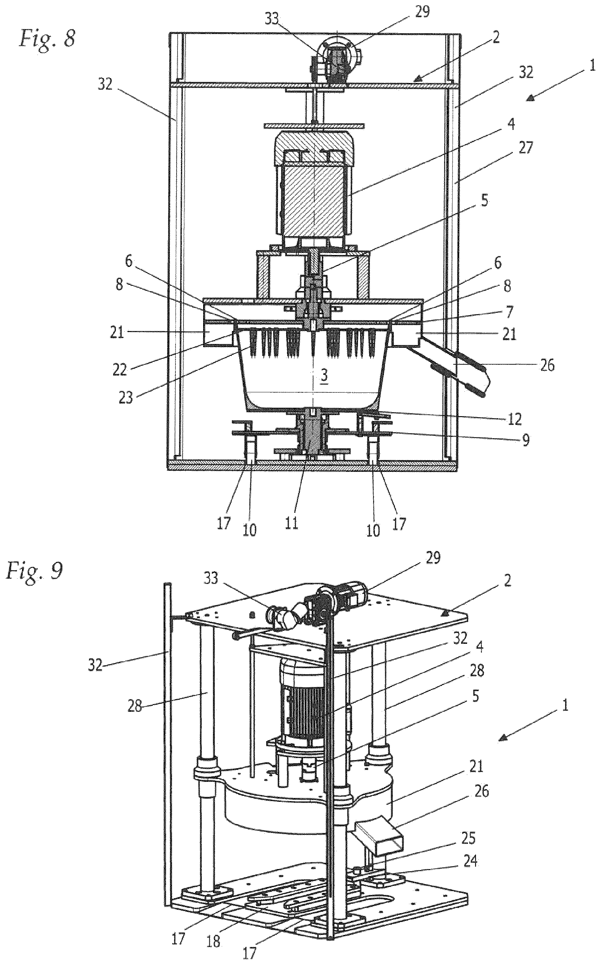

With reference to the sections of Figs. 7 and 8, the lid 7 of said basket 3 also comprises a counter-plate 22, facing the inside of the basket 3, provided with tips 23 adapted to act as retaining means of said chips when said basket 3 rotates. In fact, said tips 23 are inserted into the bundle of chips and prevent it from moving against the walls of the basket 3, where instead the oil is pushed.

In fact, the oil is separated from the chips and as a result of centrifugal force is spread on the inner wall of the basket 3. The centrifugal force also helps the oil to rise up the wall until it reaches the edge of the basket.

In particular, as shown in the section of Figs. 8 and 9, a channel 21 for collecting said oil is obtained between the upper edge of said basket 3 and the rim of said lid 7, the oil then being conveyed, through a drainage channel 26, into a specifically designated external storage vessel.

Operation of the discontinuous working cycle centrifugal machine 1 according to the invention is as follows.

The operator recovers the basket 3 loaded with scrap chips laden with oil and moves it, pushing it like a truck, by means of its base 3 provided with wheels 10 and with the gripping handle 20.

With ease, the operator moves close to the centrifugal machine 1 and, after having opened the front door 30 in the shell 27, inserts the basket 3 and its base 9 from the front, taking care that the wheels 10 and the bearings 19 of this latter are aligned with the rails 17, 18 obtained on the frame structure 2 of the machine 1 (Fig. 10).

The basket 3 is pushed into the machine until it touches the stop means 24 and the related position sensor 25 that sends information to the control unit 31.

In the meantime, the operator has removed the gripping handle 20 from the base 9 of the basket 3.

After receiving the signal, said control unit 31 activates the locking means 12, 13, 14, 15, 16 of the basket 3, adapted to release the basket from its base 9, so that it is free to rotate around its idle pin 11, and closes the front door 30 of the machine, to ensure maximum safety for the operator (Figs. 11-12).

Simultaneously, the control unit 31 controls closing of the basket 3, providing, through specific motor means 29, for the lowering of its lid 7 along the vertical guides 28, and engaging of the engaging teeth 6 provided on the edge of the basket in the slots 8 of said lid 7.

Once the motion transmission means are in position, i.e. the lid 7 and basket 3 are integral with each other and with the drive shaft 5, the control unit 31 activates the motor means 4 that thus start the machine 1.

The centrifugal force imparted to the basket 3 separates the chips from the oil, which is pushed onto the inner wall of the basket 3, and rises along it until reaching the edge.

The oil reaches the collection channel 21 that drains into a specific container inside which the oil is collected.

At the end of the centrifugation operation, the control unit 31 controls lifting of the lid 7, locking of the basket 3 on its base 9 and opening of the front door 30 of the machine.

The operator inserts the gripping handle 20 into the base 9 of the basket 3 and extracts it from the machine 1, pushing it to the collection point of the clean chips, without ever coming into contact with the oil or with the chips.

Due to the removable basket and to the motion transmission means, all the operations described above for use of the centrifugal machine enable the oil to be removed from the scrap chips in a very limited time, in the order of a few minutes, without any need for manual action, speeding up and greatly simplifying operations that in conventional machines require the use of specific personnel.

## Claims

1. A discontinuous working cycle centrifugal machine (1) for separating oil from metal chips produced by machine tools comprising:
- a fixed frame structure (2);
- a removable basket (3) having frustoconical shape adapted to contain said chips;
- motor means (4) provided with a rotating drive shaft (5);
- motion transmission means (6, 7, 8) adapted to cooperate with said drive shaft to transfer rotary motion from said motor means (4) to said basket (3) around a vertical axis;
- a control unit (31);
- a shell (27) for said frame structure;
**characterized in that**:
- said basket (3) comprises a base (9), provided with wheels (10), with which it is rotatingly associated;
- said transmission means (6, 7, 8) reversibly cooperate with said basket (3), without the drive shaft (5) passing through it;
- said shell (27) comprises a front door (30),
wherein said basket (3) can be arranged in a removable manner in said frame structure (2), passing through said front door (30), to carry out loading and unloading of said chips in the centrifugal machine (1), keeping the ground contact of its base (9).

2. The centrifugal machine (1) according to claim 1, **characterized in that** said base (9) comprises a pin (11) on which said basket (3) is free to rotate.

3. The centrifugal machine (1) according to claim 2, **characterized in that** said base (9) comprises reversible locking means (12, 13, 14, 15, 16), adapted to respectively lock or release the rotatory movement of said basket (3) on said pin (11) of said base (9).

4. The centrifugal machine (1) according to claim 1, **characterized in that** said frame structure (2) comprises alignment means (17, 18) adapted to cooperate with said base (9) to ensure correct positioning of said basket (3) inside said centrifugal machine (1).

5. The centrifugal machine (1) according to claim 1, **characterized in that** a gripping handle (20) can be reversibly associated with said base (9).

6. The centrifugal machine (1) according to claim 1, **characterized in that** said motion transmission means comprise:
- at least an engaging tooth (6) provided along the upper edge of said basket (3);
- a lid (7) for said basket (3) provided with at least a slot (8), integral with said drive shaft (5) that rotates and slides with respect to said frame structure (2),
wherein said at least an engaging tooth (6) and said at least a slot (8) are adapted to cooperate by shape coupling to make said lid (7) and said basket (3) integral and to transfer the motion from said rotating drive shaft (5) to said basket (3).

7. The centrifugal machine (1) according to claim 6, **characterized in that** it comprises a channel (21) for collecting said oil obtained between the upper edge of said basket (3) and the rim of said lid (7).

8. The centrifugal machine (1) according to claim 6, **characterized in that** said lid (7) comprises a counter-plate (22) provided with tips (23), adapted to act as retaining means of said chips when said basket (3) rotates.

9. The centrifugal machine (1) according to claim 1, **characterized in that** said motor means (4) are provided at the upper portion of said machine (1), above said basket (3).

10. The centrifugal machine (1) according to claim 1, **characterized in that** it comprises vertical guides (32) and motor means (33) adapted to enable said front door (30) to slide vertically.

## Patentansprüche

1. Eine Schleudermaschine mit diskontinuierlichem Arbeitszyklus (1) zur Trennung des Öls von den Metallspänen, die von Werkzeugmaschinen erzeugt werden, umfassend:
- eine feste Rahmenstruktur (2);
- einen herausnehmbaren Korb (3) mit kegelstumpfartiger Form, geeignet, um besagte Späne aufzunehmen;
- Motorvorrichtungen (4), versehen mit einer rotierenden Antriebswelle (5);
- Bewegungsübertragungsvorrichtungen (6, 7, 8), geeignet zur Zusammenarbeit mit besagter Antriebswelle, um die rotierende Bewegung von den besagten Motorvorrichtungen (4) auf den besagten Korb (3) um eine vertikale Achse zu übertragen;
- eine Steuereinheit (31);
- ein Gehäuse (27) für besagte Rahmenstruktur;
**gekennzeichnet dadurch, dass**:
- besagter Korb (3) eine Standfläche (9) umfasst, versehen mit Rädern (10), mit denen er rotierend in Verbindung steht;
- besagte Bewegungsübertragungsvorrichtungen (6, 7, 8) reversibel mit besagtem Korb (3) kooperieren, ohne dass die Antriebswelle (5) durch ihn hindurchgeht;
- besagtes Gehäuse (27) eine Vordertür(30) umfasst,
in der besagter Korb (3) in herausnehmbarer Weise in besagter Rahmenstruktur (2) angeordnet werden kann, indem er durch besagte Vordertür (30) hindurchgeht, um das Laden und Entladen der besagten Späne in die besagte Schleudermaschine (1) auszuführen, wobei der Bodenkontakt seiner Standfläche (9) beibehalten wird.

2. Die Schleudermaschine (1) gemäß Anspruch 1, **gekennzeichnet dadurch, dass** besagte Standfläche (9) einen Stift (11) umfasst, um den besagter Korb (3) frei rotiert.

3. Die Schleudermaschine (1) gemäß Anspruch 2, **gekennzeichnet dadurch, dass** besagte Standfläche (9) reversible Sperrvorrichtungen (12, 13, 14, 15, 16) umfasst, geeignet, um jeweils die Drehbewegung des besagten Korbs (3) um den besagten Stift (11) der besagten Standfläche (9) zu versperren oder freizugeben,

4. Die Schleudermaschine (1) gemäß Anspruch 1, **gekennzeichnet dadurch, dass** besagte Rahmenstruktur (2) Ausrichtungsvorrichtungen (17, 18) umfasst, geeignet, um mit besagter Standfläche (9) zu kooperieren, um das korrekte Positionieren des besagten Korbs (3) in der besagten Schleudermaschine (1) zu gewährleisten.

5. Die Schleudermaschine (1) gemäß Anspruch 1, **gekennzeichnet dadurch, dass** ein Handgriff (20) mit besagter Standfläche (9) reversibel in Verbindung gebracht werden kann.

6. Die Schleudermaschine (1) gemäß Anspruch 1, **gekennzeichnet dadurch, dass** besagte Bewegungsübertragungsvorrichtungen Folgendes umfassen:
- zumindest einen eingreifenden Zahn (6), der längs der oberen Kante des besagten Korbs (3) angeordnet ist;
- einen Deckel (7) für besagten Korb (3), versehen mit mindestens einer Vertiefung (8), fest verbunden mit besagter Antriebswelle (5), die in Bezug auf besagte Rahmenstruktur (2) rotiert und gleitet,
wobei der besagte zumindest eine eingreifende Zahn (6) und die besagte zumindest eine Vertiefung (8) geeignet sind, um durch Formenverkopplung besagten Deckel (7) und besagten Korb (3) fest miteinander zu verbinden, und die Bewegung von der besagten Antriebswelle (5) auf den Korb (3) zu übertragen,

7. Die Schleudermaschine (1) gemäß Anspruch 6, **gekennzeichnet dadurch, dass** sie einen Kanal (21) zum Auffangen des besagten Öls umfasst, gewonnen zwischen der oberen Kante des besagten Korbs (3) und dem Rand des besagten Deckels (7),

8. Die Schleudermaschine (1) gemäß Anspruch 6, **gekennzeichnet dadurch, dass** besagter Deckel (7) eine Gegenplatte (22) umfasst, versehen mit Spitzen (23), geeignet um als Haltevorrichtungen für die besagten Späne zu wirken, wenn besagter Korb (3) rotiert.

9. Die Schleudermaschine (1) gemäß Anspruch 1, **gekennzeichnet dadurch, dass** besagte Motorvorrichtungen (4) im oberen Bereich der besagten Maschine (1) über dem besagten Korb (3) angebracht sind.

10. Die Schleudermaschine (1) gemäß Anspruch 1, **gekennzeichnet dadurch, dass** sie vertikale Führungen (32) und Motorvorrichtungen (33) umfasst, geeignet, um zu ermöglichen, dass die besagte vordere Tür (30) in vertikaler Richtung gleitet.

## Revendications

1. Machine centrifuge à cycle de fonctionnement discontinu (1) pour séparer l'huile des copeaux métalliques qui sont produits par des machines-outils comprenant :
- une structure de châssis fixe (2) ;
- un panier amovible (3) ayant une forme tronconique adaptée pour contenir lesdits copeaux ;
- des moyens motorisés (4) dotés d'un arbre d'entraînement rotatif (5) ;
- des moyens de transmission de mouvement (6, 7, 8) adaptés pour coopérer avec ledit arbre d'entraînement pour transférer un mouvement rotatif depuis lesdits moyens motorisés (4) vers ledit panier (3) autour d'un axe vertical ;
- une unité de contrôle (31) ;
- une enveloppe (27) pour ladite structure de châssis ;
**caractérisée par le fait que** :
- ledit panier (3) comprend une base (9), dotée de roues (10), avec laquelle il est associé de manière rotative ;
- lesdits moyens de transmission (6, 7, 8) coopèrent de manière réversible avec ledit panier (3), sans l'arbre d'entraînement (5) passant à travers celui-ci ;
- ladite enveloppe (27) comprend une porte frontale (30),
où ledit panier (3) peut être disposé de manière amovible dans ladite structure de châssis (2), passant à travers ladite porte frontale (30), pour effectuer le chargement et le déchargement desdits copeaux dans la machine centrifuge (1), en maintenant le contact au sol de sa base (9).

2. Machine centrifuge (1) selon la revendication 1, **caractérisée par le fait que** ladite base (9) comprend un doigt (11) sur lequel ledit panier (3) est libre de pivoter.

3. Machine centrifuge (1) selon la revendication 2, **caractérisée par le fait que** ladite base (9) comprend des moyens de verrouillage réversibles (12, 13, 14, 15, 16), adaptés pour verrouiller ou libérer respectivement le mouvement rotatoire dudit panier (3) sur ledit doigt (11) de ladite base (9).

4. Machine centrifuge (1) selon la revendication 1, **caractérisée par le fait que** ladite structure de châssis (2) comprend des moyens d'alignement (17, 18) adaptés pour coopérer avec ladite base (9) pour assurer un positionnement correct dudit panier (3) à l'intérieur de ladite machine centrifuge (1).

5. Machine centrifuge (1) selon la revendication 1, **caractérisée par le fait qu'**une poignée de préhension (20) peut être associée de manière réversible avec ladite base (9).

6. Machine centrifuge (1) selon la revendication 1, **caractérisée par le fait que** ladite transmission de mouvement comprend :
- au minimum une dent d'engagement (6) prévue le long du bord supérieur dudit panier (3) ;
- un couvercle (7) pour ledit panier (3) doté d'au minimum une fente (8), intégré avec ledit arbre d'entraînement (5) qui pivote et coulisse par rapport à ladite structure de châssis (2),
où ladite dent d'engagement (6) au minimum et ladite fente (8) au minimum sont adaptée pour coopérer par accouplement de forme pour réaliser ledit couvercle (7) et ledit panier (3) intégré et pour transférer le mouvement depuis ledit arbre d'entraînement rotatif (5) vers ledit panier (3).

7. Machine centrifuge (1) selon la revendication 6, **caractérisée par le fait qu'**elle comprend un canal (21) pour collecter ladite huile obtenue entre le bord supérieur dudit panier (3) et le bord dudit couvercle (7).

8. Machine centrifuge (1) selon la revendication 6, **caractérisée par le fait que** ledit couvercle (7) comprend une contre-plaque (22) dotée de pointes (23), adaptées pour servir comme moyens de retenue desdits copeaux lorsque ledit panier (3) pivote.

9. Machine centrifuge (1) selon la revendication 1, **caractérisée par le fait que** lesdits moyens motorisés (4) sont prévus sur la portion supérieure de ladite machine (1), au-dessus dudit panier (3).

10. Machine centrifuge (1) selon la revendication 1, **caractérisée par le fait qu'**elle comprend des guides verticaux (32) et des moyens motorisés (33) adaptés pour permettre à ladite porte frontale (30) de coulisser verticalement.
